# FASCICULE DE BREVET EUROPEEN

(11) **EP 4 320 339 B1**
(45) Date de publication et mention de la délivrance du brevet: **12.08.2026**
(21) Numéro de dépôt: 22719976.7
(22) Date de dépôt: 05.04.2022
(51) Int. Cl.: F01D 25/28, B29C 70/24, B64D 29/00

(54) **VIROLE EXTERIEURE DE CARTER INTERMEDIAIRE EN MATERIAU COMPOSITE, POUR TURBOMACHINE D'AERONEF**
ZWINGE FÜR DAS AUSSENGEHÄUSE AUS VERBUNDMATERIAL FÜR EIN FLUGZEUGTURBINENTRIEBWERK
EXTERIOR FERRULE OF AN INTERMEDIATE HOUSING MADE OF COMPOSITE MATERIAL, FOR AN AIRCRAFT TURBINE ENGINE

(30) Priorité: 08.04.2021 FR 2103576
(43) Date de publication de la demande: 14.02.2024
(73) Titulaire: SAFRAN AIRCRAFT ENGINES, 75015 Paris (FR)
(72) Inventeur: VOGEL, Thibaut, 77550 MOISSY-CRAMAYEL (FR); BAROUMES, Laurent Jean Baptiste, 77550 MOISSY-CRAMAYEL (FR); CHARLEUX, François, 77550 MOISSY-CRAMAYEL (FR); GRELIN, Hervé, 77550 MOISSY-CRAMAYEL (FR); MOHAMED, Azath, 77550 MOISSY-CRAMAYEL (FR)
(74) Mandataire: Santarelli
(86) Numéro de dépôt international: PCT/FR2022/050637
(87) Numéro de publication internationale: WO 2022/214765

(56) Documents cités:
- US-A1- 2007 217 913
- US-A1- 2013 207 303
- US-A1- 2013 227 963
- US-A1- 2016 047 275

## Description

### DOMAINE TECHNIQUE

L'invention se rapporte au domaine des carters intermédiaires pour turbomachines d'aéronef, et plus précisément à la fabrication de la virole extérieure d'un tel carter intermédiaire.

Une virole de carter intermédiaire de turbomachine d'aéronef est par exemple connue du document FR 2 925 120 A1 et du document US 206/047275.

### ÉTAT DE LA TECHNIQUE ANTÉRIEURE

De manière connue, un mât d'accrochage de turbomachine, également appelé « EMS » (de l'anglais « Engine Mounting Structure »), ou encore « pylon » ou « engine pylon », permet classiquement de suspendre la turbomachine en dessous de la voilure de l'aéronef. Il est en effet prévu pour constituer l'interface de liaison entre la turbomachine et une partie structurale donnée de l'aéronef, souvent le caisson avant de voilure. Il permet de transmettre à la structure de cet aéronef les efforts générés par la turbomachine, et autorise également le cheminement du carburant, des systèmes électriques, hydrauliques, et air entre la turbomachine et l'aéronef.

La nacelle est quant à elle classiquement équipée de plusieurs capots enveloppant la turbomachine, et permettant un accès à ce dernier en position ouverte. Ces capots sont connus sous les dénominations de capots de soufflante et de capots d'inverseur de poussée, ces derniers étant articulés sur la structure primaire du mât d'accrochage.

Le turboréacteur comporte un carter de soufflante prolongé vers l'arrière par un carter dit intermédiaire, comprenant une virole extérieure, un moyeu interne, ainsi que des bras structuraux répartis angulairement et s'étendant radialement entre le moyeu et la virole extérieure qu'ils relient. Le carter intermédiaire correspond donc à l'élément structural agencé entre le carter de soufflante situé plus en amont, et des capots de nacelle situés plus en aval. Plus précisément, l'extrémité aval annulaire du carter intermédiaire est dédiée à la réalisation de l'interface entre ce carter intermédiaire et des capots de nacelle, généralement les capots d'inverseur de poussée.

L'extrémité aval annulaire du carter intermédiaire forme une rainure périphérique annulaire, ou sensiblement annulaire, ouverte radialement vers l'extérieur. Cette rainure est destinée à recevoir un organe de liaison complémentaire prévu sur les capots d'inverseur de poussée, et elle est par ailleurs délimitée par une paroi amont de rainure, ainsi que par une paroi aval de rainure, toutes les deux des parois radiales. L'organe de liaison complémentaire peut ainsi être une nervure radiale s'étendant vers l'intérieur, de façon à se loger dans la rainure entre les deux parois amont et aval. La coopération entre la nervure et la rainure permet la transmission des efforts aérodynamiques de la nacelle vers la turbomachine, en phases de décollage, de vol, et d'atterrissage, en particulier les efforts axiaux, et encore plus particulièrement les efforts axiaux de contre-poussée lorsque les systèmes d'inverseur de poussée équipant les capots de nacelle sont actionnés.

Cet agencement, qui se caractérise par la simple pénétration de la nervure dans la rainure, permet une ouverture aisée et rapide des capots d'inverseur articulés sur le mât, cette ouverture étant par exemple réalisée pour la mise en œuvre d'opérations de maintenance de l'aéronef stationné au sol. Pour la fabrication de la virole extérieure du carter intermédiaire, il est connu plusieurs solutions, parmi lesquelles celle visant à réaliser le fût de cette virole en matériau composite, et en y rapportant une structure d'extrémité aval métallique définissant la rainure.

La fabrication du fût de la virole extérieure s'effectue donc en matériau composite, habituellement à partir d'un renfort fibreux densifié par une matrice, de préférence de la résine, comme de la résine époxy. Dans ce cas, le fût est fabriqué à partir d'une préforme fibreuse pouvant être obtenue de différentes façons connues de l'homme du métier, typiquement par tissage tridimensionnel de fils (tissage 3D), ou par drapage de tissus fibreux bidimensionnels.

L'utilisation d'un matériau composite pour le fût de virole extérieure réduit la masse de la turbomachine, mais cette masse reste encore impactée par la présence de la structure d'extrémité aval métallique définissant la rainure périphérique, ainsi que par les moyens de fixation mécanique requis à l'interface, tels que des boulons.

L'invention a donc pour but de réduire encore davantage la masse de la virole extérieure du carter intermédiaire, tout en proposant une conception facilitant sa fabrication.

### EXPOSÉ DE L'INVENTION

Pour répondre au but identifié ci-dessus, l'invention a tout d'abord pour objet une virole extérieure de carter intermédiaire pour turbomachine d'aéronef, la virole en matériau composite comprenant une extrémité aval annulaire de liaison formant une rainure périphérique ouverte radialement vers l'extérieur, ladite rainure étant destinée à recevoir un organe de liaison complémentaire prévu sur un ou plusieurs capots de nacelle, et cette rainure étant délimitée par une paroi amont de rainure, ainsi que par une paroi aval de rainure.

Selon l'invention, la virole est réalisée à partir :
- d'une première préforme fibreuse obtenue par tissage tridimensionnel de fils et densifiée par une matrice, la première préforme définissant un fût de la virole ainsi qu'une partie structurale de la paroi aval de rainure, en saillie radialement vers l'extérieur par rapport au fût ; et
- d'une seconde préforme fibreuse ou d'un groupe de secondes préformes fibreuses, chaque seconde préforme fibreuse étant obtenue par tissage tridimensionnel de fils et densifiée par une matrice, la seconde préforme ou le groupe de secondes préformes définissant une base rapportée extérieurement sur le fût défini par la première préforme, ainsi qu'une partie structurale de la paroi amont de rainure, en saillie radialement vers l'extérieur par rapport au fût.

L'invention présente l'avantage d'une masse réduite, en raison de sa conception « tout composite » et de l'absence de moyens de fixation mécanique, tels que des boulons. Cette réduction de masse de la virole extérieure permet une diminution de la consommation spécifique de la turbomachine, et s'inscrit ainsi dans une démarche de diminution des émissions de gaz à effet de serre.

De plus, l'invention prévoit avantageusement de réaliser la rainure périphérique à l'aide de deux préformes, pour simplifier la forme de celles-ci, et par conséquent faciliter leur réalisation. La paroi aval de rainure étant la plus sollicitée mécaniquement durant les phases de contre-poussée, il s'avère particulièrement judicieux d'intégrer la partie structurale de cette paroi aval au sein d'une préforme unique définissant également le fût de la virole, correspondant à la partie structurale la plus conséquente de cette virole extérieure de carter intermédiaire. La paroi amont de rainure demeurant quant à elle moins sollicitée mécaniquement par les capots de nacelle, sa formation à partir d'une préforme dédiée, rapportée sur l'autre préforme, constitue une solution technique parfaitement appropriée.

L'invention prévoit de préférence au moins l'une quelconque des caractéristiques optionnelles suivantes, prises isolément ou en combinaison.

De préférence, dans le cas d'une seconde préforme fibreuse, c'est-à-dire avec une unique seconde préforme fibreuse tissée 3D, celle-ci présente une forme annulaire ou sensiblement annulaire centrée sur un axe central longitudinal de la virole, et dans l'autre cas d'un groupe de secondes préformes fibreuses, chacune d'elles se présente sous la forme d'un secteur angulaire pour former ensemble une structure annulaire ou sensiblement annulaire centrée sur l'axe central longitudinal de la virole.

De préférence, la virole comprend un revêtement antifriction recouvrant les parois amont et aval de rainure, à l'intérieur de la rainure, le revêtement antifriction étant préférentiellement un tissu ou un clinquant. Le revêtement antifriction permet de diminuer les frottements entre la virole extérieure et les capots de nacelle, au niveau de la rainure formant l'interface entre ces éléments. Cela permet de limiter l'usure de ces éléments, et d'en augmenter la durée de vie.

De préférence, la virole comprend également une troisième préforme fibreuse ou un groupe de troisièmes préformes fibreuses, chaque troisième préforme fibreuse étant obtenue par tissage tridimensionnel de fils et densifiée par une matrice, la troisième préforme ou le groupe de troisièmes préformes définissant une base rapportée intérieurement sur le fût défini par la première préforme, ainsi qu'une portée structurale de joint d'étanchéité faisant saillie axialement vers l'aval au-delà de la paroi aval de rainure, la troisième préforme ou chaque préforme du groupe de troisièmes préformes étant de préférence déliée au tissage de manière à définir également une base additionnelle rapportée extérieurement sur la paroi aval de rainure. Si cette base additionnelle reste facultative, il est noté qu'elle renforce la tenue mécanique de la portée structurale de joint.

L'invention a également pour objet une turbomachine d'aéronef comprenant une telle virole extérieure de carter intermédiaire. La turbomachine est préférentiellement un turboréacteur, de préférence à double flux et/ou à double corps, mais d'autres types de turbomachines sont également envisageables, comme un turbopropulseur, sans sortir du cadre de l'invention. Très préférentiellement, l'invention concerne un turboréacteur à très haut taux de dilution, également dénommé turboréacteur UHBR (de l'anglais « Ultra High Bypass Ratio).

L'invention a également pour objet un procédé de fabrication d'une virole extérieure de carter intermédiaire pour turbomachine d'aéronef, la virole en matériau composite comprenant une extrémité aval annulaire de liaison formant une rainure périphérique ouverte radialement vers l'extérieur, ladite rainure étant destinée à recevoir un organe de liaison complémentaire prévu sur un ou plusieurs capots de nacelle, et cette rainure étant délimitée par une paroi amont de rainure, ainsi que par une paroi aval de rainure.

Selon l'invention, le procédé comporte les étapes suivantes :
- réalisation d'une première préforme fibreuse par tissage tridimensionnel de fils, la première préforme étant destinée à définir un fût de la virole ainsi qu'une partie structurale de la paroi aval de rainure, en saillie radialement vers l'extérieur par rapport au fût ;
- réalisation d'une seconde préforme fibreuse ou d'un groupe de secondes préformes fibreuses, chaque seconde préforme étant réalisée par tissage tridimensionnel de fils, la seconde préforme ou le groupe de secondes préformes étant destiné à définir une base ainsi qu'une partie structurale de la paroi amont de rainure, en saillie radialement vers l'extérieur par rapport au fût ;
- injection et polymérisation d'une matrice de densification de la première préforme ; et
- injection et polymérisation d'une matrice de densification de la seconde préforme ou du groupe de secondes préformes, de manière à ce que la base soit rapportée fixement et extérieurement sur le fût de la virole.

Les avantages liés à ce procédé de fabrication sont ceux mentionnés ci-dessus, en rapport à la virole extérieure également objet de l'invention. Comme cela sera détaillé ci-après, les différentes étapes d'injection de matrices peuvent être réalisées simultanément, par co-injection, ou bien successivement.

En effet, il est par exemple fait en sorte que l'injection d'une matrice de densification de la première préforme s'effectue en même temps que l'injection d'une matrice de densification de la seconde préforme ou du groupe de secondes préformes, par co-injection de matrice de préférence dans un outillage à injection flexible, dans un outillage de transfert de matrice en moule rigide, ou dans un outillage hybride à injection flexible et de transfert de matrice en moule rigide. La technique d'injection visée à l'aide de l'outillage de transfert de matrice en moule rigide est préférentiellement le moulage par transfert de résine, ou moulage RTM (de l'anglais « Resin Transfert Molding »). La technique d'injection visée avec l'outillage à injection flexible est préférentiellement l'imprégnation dans une chambre d'imprégnation définie en partie par une membrane souple et imperméable. Cette technique est éventuellement mise en œuvre à l'aide d'une chambre de compaction séparée de la chambre d'imprégnation par la membrane, comme cela est par exemple connu du document WO2018/234669A1.

L'une ou l'autre de ces deux techniques d'injection préférentielles peut en effet être retenue pour la réalisation de la virole extérieure, ou bien elles peuvent préférentiellement être combinées.

Selon un autre exemple de réalisation de la virole extérieure, il est d'abord procédé à l'injection et à la polymérisation d'une matrice de densification de la première préforme, de préférence dans un outillage de transfert de matrice en moule rigide, puis ensuite, lors d'une étape ultérieure de cuisson, à l'injection et à la polymérisation d'une matrice de densification de la seconde préforme ou du groupe de secondes préformes, de préférence dans un outillage de transfert de matrice en moule rigide. Dans cet exemple, la consolidation de la seconde préforme ou du groupe de secondes préformes s'effectue ainsi après la consolidation de la première préforme. Toujours dans cet exemple, d'autres types d'outillage et d'autres modes d'injection peuvent être retenus, sans sortir du cadre de l'invention.

De préférence, le procédé comprend la réalisation d'un revêtement antifriction recouvrant les parois amont et aval de rainure, à l'intérieur de la rainure, le revêtement antifriction étant de préférence réalisé par co-cuisson lors de la cuisson de la première préforme et de la seconde préforme ou du groupe de secondes préformes, ou collé sur les parois amont et aval de rainure après ladite cuisson. De préférence, le procédé comprend également :
- la réalisation d'une troisième préforme fibreuse ou d'un groupe de troisièmes préformes fibreuses, chaque troisième préforme étant réalisée par tissage tridimensionnel de fils, la troisième préforme ou le groupe de troisièmes préformes étant destiné à définir une base ainsi qu'une portée structurale de joint d'étanchéité faisant saillie axialement vers l'aval au-delà de la paroi aval de rainure ; et
- injection et polymérisation d'une matrice de densification de la troisième préforme ou du groupe de troisièmes préformes, de manière à ce que la base soit rapportée fixement et intérieurement sur le fût de la virole.

Ici également, la cuisson de la troisième préforme ou du groupe de troisièmes préformes peut s'effectuer par co-cuisson lors de la cuisson de la première préforme, ou bien lors d'une étape de cuisson ultérieure.

Enfin, le procédé peut également comprendre la réalisation d'un revêtement antifriction recouvrant la portée structurale de joint. Dans ce cas, le revêtement antifriction est de préférence réalisé par co-cuisson lors de la cuisson de la troisième préforme ou du groupe de troisièmes préformes, ou bien collé après ladite cuisson.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue en demi-coupe axiale d'une turbomachine d'aéronef, selon un mode de réalisation préféré de l'invention ;
[Fig. 2] représente une vue en perspective de la virole extérieure du carter intermédiaire équipant la turbomachine montrée sur la figure précédente ;
[Fig. 3] représente une vue partielle agrandie en coupe axiale montrant la coopération entre la virole extérieure de carter intermédiaire, et un capot de nacelle ;
[Fig. 4] représente une vue partielle en demi-coupe axiale de la virole extérieure, avant les étapes d'injection de matrice et de polymérisation de celle-ci ;
[Fig. 5] représente une vue similaire à celle de la figure 4, durant les étapes d'injection de matrice et de polymérisation ;
[Fig. 6] est une vue similaire à celle de la figure 4, avec la virole extérieure se présentant sous la forme d'un autre mode de réalisation ; et
[Fig. 7] est une vue similaire à celle de la figure 6, avec la virole extérieure se présentant sous la forme d'un autre mode de réalisation.

### EXPOSÉ DÉTAILLÉ DE MODES DE RÉALISATION PARTICULIERS

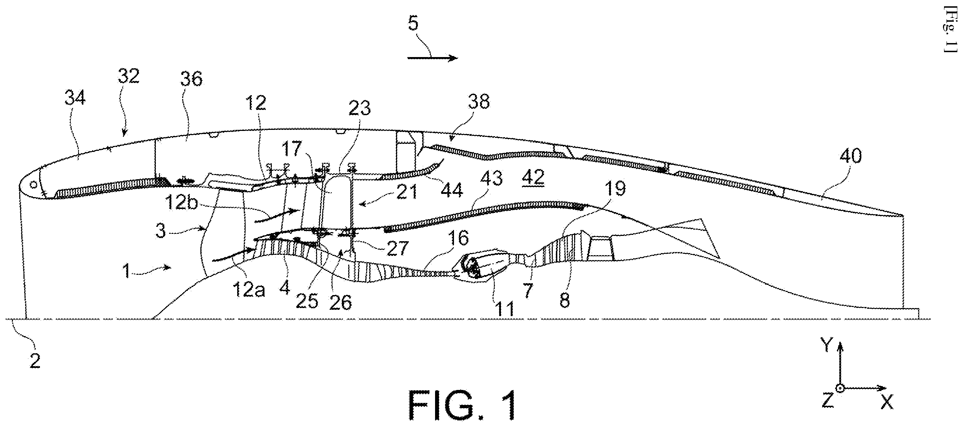

En référence tout d'abord à la figure 1, il est représenté une turbomachine 1 d'aéronef, selon un mode de réalisation préféré de l'invention. Il s'agit ici d'un turboréacteur à double flux et à double corps. Néanmoins, il pourrait s'agir d'une turbomachine d'un autre type, par exemple d'un turbopropulseur, sans sortir du cadre de l'invention.

Le turboréacteur 1 présente un axe central longitudinal 2 autour duquel s'étendent ses différents composants. Elle comprend, d'amont en aval selon une direction principale 5 d'écoulement des gaz à travers ce turboréacteur, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale de circulation des gaz traversant les compresseurs 4, 6, la chambre de combustion 11 et les turbines 7, 8. Le flux secondaire 12b s'écoule quant à lui dans une veine secondaire délimitée radialement vers l'extérieur par un carter moteur, entouré d'une nacelle 32.

Le carter moteur est scindé en plusieurs éléments, parmi lesquels un carter intermédiaire 21, comprenant une virole extérieure 23 située dans le prolongement aérodynamique aval d'un carter de soufflante 12. Le carter intermédiaire 21 comporte également un moyeu 26 formé par des flasques transversaux 25, 27 disposés radialement intérieurement par rapport à la virole extérieure 23, le carter 21 comprenant en outre des bras structuraux 17 répartis angulairement et s'étendant radialement pour relier la virole extérieure 23 et le moyeu 26.

Le turboréacteur comprend également un carter central 16, également dit carter « core », prolongeant le moyeu 26 du carter intermédiaire 21 vers l'aval, et sur lequel il est raccordé. Il est noté que le carter central s'étend jusqu'à une extrémité arrière 19 de plus grande dimension, également dénommée carter d'éjection.

De manière connue et comme cela sera détaillé ultérieurement, la virole extérieure 23 du carter intermédiaire comporte une extrémité aval de liaison avec une rainure périphérique, dont le but principal est d'établir une liaison entre cette virole extérieure 23 et les capots de nacelle directement adjacents vers l'aval.

La nacelle 32 forme une surface extérieure aérodynamique continue à l'aide de différents éléments adjacents qui se succèdent de l'amont vers l'aval, parmi lesquels une entrée d'air 34, des capots de soufflante 36, des capots d'inverseur de poussée 38, et un capotage arrière fixe 40.

Les capots d'inverseur de poussée 38, généralement au nombre de deux et articulés sur la structure rigide d'un mât d'accrochage du turboréacteur 1, délimitent de façon connue un canal annulaire de flux secondaire 42, grâce à des peaux annulaires externe 44 et interne 43.

Chaque capot d'inverseur de poussée 38, également dénommé capot arrière ou capot « core », présente une forme générale de demi-cylindre, avec son extrémité supérieure destinée à être articulée sur la structure rigide du mât, et son extrémité inférieure destinée à être verrouillée à l'extrémité inférieure de l'autre capot 38, par des moyens conventionnels.

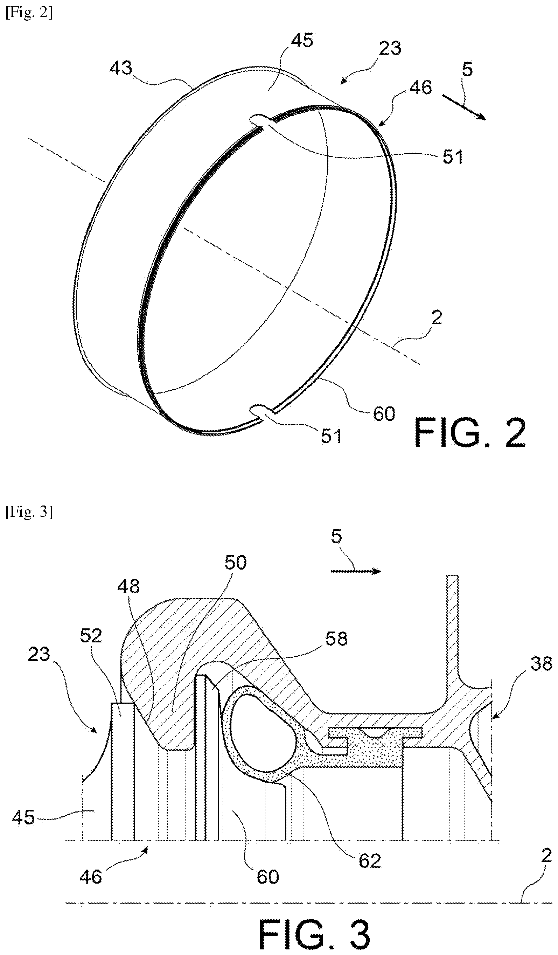

Avec son extrémité amont, et dans sa position fermée, chaque capot d'inverseur 38 se raccorde donc à l'extrémité aval annulaire de liaison de la virole extérieure 23 du carter intermédiaire. La figure 2 montre la virole extérieure 23 à plus grande échelle, tandis que la figure 3 représente la coopération entre cette virole 23 et les capots d'inverseur 38 (seul l'un d'eux étant visible sur cette figure 3).

La virole extérieure 23, également objet de la présente invention, s'étend autour d'un axe central longitudinal de virole, correspondant à l'axe 2 du turboréacteur. La partie structurale de la virole extérieure 23 est réalisée entièrement en matériau composite, formant une pièce unique incorporant successivement, de l'amont vers l'aval, une bride radiale amont 42 de fixation sur le carter de soufflante, un fût de virole 45 de forme sensiblement cylindrique et de section circulaire, et enfin l'extrémité aval annulaire de liaison 46. Celle-ci forme une rainure périphérique 48 ouverte radialement vers l'extérieur, de forme annulaire ou sensiblement annulaire. En effet, cette rainure 48 peut être interrompue par des encoches 51, par exemple deux encoches axiales 51 traversant l'extrémité aval annulaire de liaison 46 dans des positions horaires diamétralement opposées, à 12h et à 6h comme cela est connu de l'homme du métier.

La rainure 48 adopte par exemple en forme générale de V, et reçoit une nervure 50 prévue sur l'extrémité amont de chaque capot d'inverseur 38. Comme cela est visible sur la figure 3, la nervure 50 s'étend de préférence radialement vers l'intérieur, avec une forme générale de V complémentaire de celle de la rainure 48. Chaque nervure 50 s'étend préférentiellement sur un secteur angulaire d'environ 180°, ou sur une valeur d'angle légèrement inférieure. Elle constitue ainsi un organe de liaison complémentaire coopérant avec la rainure 48, pour réaliser l'interface entre la virole 23 et chaque capot 38.

La rainure annulaire 48 est délimitée axialement d'une part à l'aide d'une paroi amont de rainure 52, et d'autre part à l'aide d'une paroi aval de rainure 58. Chacune de ces parois 52, 58 s'étend radialement vers l'extérieur par rapport au fût 45, et présente une forme annulaire centrée sur l'axe 2, ou une forme sensiblement annulaire si des encoches axiales 51 sont réalisées.

La coopération entre la rainure périphérique 48 et chaque nervure complémentaire 50 permet la transmission des efforts aérodynamiques des capots d'inverseur 38 vers le turboréacteur, en particulier les efforts axiaux, et encore plus particulièrement les efforts axiaux de contre-poussée.

En aval de la paroi aval de rainure 58, l'extrémité de liaison 46 comporte une portée structurale 60 de joint d'étanchéité. Cette portée 60 se situe en saillie axialement vers l'aval par rapport à la paroi aval de rainure 58, et elle reçoit un joint d'étanchéité 62 porté par l'extrémité amont du capot d'inverseur 38. Ce joint 62 peut ainsi s'écraser sur la portée structurale 60 à la fermeture du capot 38, mais également s'écraser sur la surface aval de la paroi aval de rainure 58, comme le montre la figure 3.

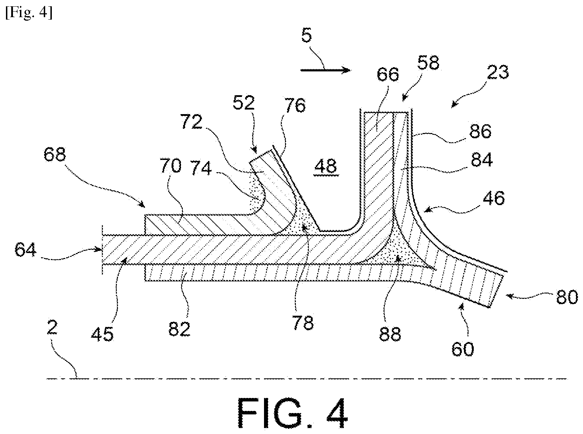

En référence à présent à la figure 4, il est représenté les différents éléments à partir desquels la virole extérieure 23 est réalisée. Il est noté que sa réalisation, qualifiée de « tout composite », induit l'absence de moyens mécaniques de fixation entre ses différentes parties, donc l'absence de boulons, de rivets, etc.

Sur la figure 4, les éléments constitutifs de la virole 23 sont représentés dans un état correspondant à celui avant leur imprégnation par une matrice du type résine, de préférence une résine époxy, et donc avant l'étape / les étapes de cuisson conduisant à la polymérisation / consolidation de la résine. La figure 4 représente donc, en particulier, des préformes fibreuses toutes réalisées par tissage 3D de fils, destinées à être densifié par la résine injectée ultérieurement. Typiquement, les fibres utilisées pour la réalisation des préformes sont des fibres de carbone, même si d'autres matériaux conventionnels peuvent être envisagés, sans sortir du cadre de l'invention.

Il est tout d'abord prévu une première préforme fibreuse 64, destinée à définir la bride amont de fixation de la virole (non visible sur la figure 4), le fût 45, ainsi qu'une partie structurale 66 de la paroi aval de rainure 58. La partie 66 s'étend radialement vers l'extérieur par rapport au fût, en adoptant une forme annulaire ou sensiblement annulaire. Cette partie structurale 66 de la paroi aval de rainure 58, définie par la première préforme 64, s'étend sur toute la longueur radiale de la paroi aval de rainure 58 finalisée, ou sur sensiblement toute la longueur de celle-ci. La première préforme 64 est ainsi préférentiellement annulaire, centrée sur l'axe 2, et de demi-section en forme générale de U.

Ensuite, il est prévu une seconde préforme fibreuse 68, ou un groupe de secondes préformes fibreuses. Le choix entre ces deux solutions est dicté en fonction de la manière dont la réalisation de la paroi amont de rainure 52 est souhaitée, soit d'une seule pièce continue dans la direction circonférentielle, soit de façon sectorisée dans cette même direction. Dans le premier cas d'une seconde préforme fibreuse 68 unique, celle-ci présente alors une forme annulaire ou sensiblement annulaire centrée sur l'axe 2, et dans le second cas d'un groupe de secondes préformes fibreuses, chacune d'elles se présente sous la forme d'un secteur angulaire pour former ensemble une structure annulaire ou sensiblement annulaire centrée sur ce même axe 2. Il s'agit par exemple de deux secteurs angulaires, chacun d'environ 180°.

Par la suite, seul le premier cas sera considéré, étant néanmoins précisé que le principe reste identique ou similaire lorsqu'il est procédé à une réalisation sectorisée de la paroi amont de rainure 52, qui peut être motivée par la présence des encoches axiales précitées sur la virole 23.

Ainsi, la seconde préforme fibreuse 68 est tissée de manière à définir une base 70 destinée à être rapportée fixement et extérieurement sur le fût 45, sur une extrémité aval de ce dernier, et également de manière à définir une partie structurale 72 de la paroi amont de rainure 52, en saillie radialement vers l'extérieur par rapport au fût 45.

Au lieu d'être strictement radiale comme peut l'être la partie structurale 66 de la paroi aval de rainure 58, la partie structurale 72 de la paroi amont de rainure 52 peut être inclinée vers l'amont, de manière à procurer la forme générale souhaité en V pour la rainure 48. Dans cette hypothèse, le creux défini par le rayon de raccordement entre cette partie structurale 72, et la surface extérieure de la base 70, peut être comblé à l'aide d'un matériau de remplissage 74, de préférence polymérisable.

La partie structurale 72 s'étend radialement vers l'extérieur par rapport au fût 45 et par rapport à la base 70, en adoptant une forme annulaire ou sensiblement annulaire. Cette partie structurale 72, définie par la seconde préforme 68, s'étend sur toute la longueur radiale de la paroi amont de rainure 52 finalisée, ou sur sensiblement toute la longueur de celle-ci. La seconde préforme 68 est ainsi préférentiellement annulaire, centrée sur l'axe 2, et de demi-section en forme générale de V ouvert axialement vers l'amont et radialement vers l'extérieur.

Pour diminuer les frottements entre les deux parois de rainure 52, 58 et la nervure des capots de nacelle destinée à se loger dans la rainure 48, la virole 23 comprend un revêtement antifriction 76 qui épouse tout ou partie de la surface intérieure de cette rainure. En particulier, le revêtement 76 recouvre les deux parois amont et aval 52, 58, et plus précisément les deux parties structurales 72, 66 définies par les préformes 64, 68. A titre indicatif, il est noté que le revêtement antifriction 76 en forme de V, complémentaire de celle de la rainure 48, peut présenter des nervures d'accrochage (non représentées) pour faciliter la fixation sur les préformes 64, 68, et/ou peut se prolonger radialement vers l'extérieur pour recouvrir les extrémités des parties structurales 66, 72, afin de les protéger contre les chocs. De telles réalisations sont par exemple connues du document FR 2 994 216 A1.

Le revêtement antifriction 76 peut être un tissu destiné à être imprégné et cuit en même temps que les première et seconde préformes fibreuses 64, 68. Alternativement, il peut s'agir d'un clinquant, par exemple métallique, collé sur les parois de rainure 52, 58 lors d'une phase ultérieure, après cuisson de celles-ci.

Lors de la mise en position des éléments précités, un creux peut se former entre les éléments suivants :
- la surface extérieure de la première préforme 64, au niveau du fond de la rainure 48 ;
- le revêtement antifriction 76 ; et
- le rayon de raccordement entre la base 70 et la partie structurale 72 définies par la seconde préforme 68.

Ce creux peut également être comblé à l'aide d'un matériau de remplissage 78, de préférence polymérisable.

Ensuite, il est prévu une troisième préforme fibreuse 80, ou un groupe de troisièmes préformes fibreuses. Ici également, il sera par la suite décrit seulement le premier cas d'une troisième préforme fibreuse unique, étant néanmoins précisé que le principe reste identique ou similaire lorsqu'il est procédé à une réalisation sectorisée de la portée structurale de joint 60.

Ainsi, la troisième préforme fibreuse 80 est tissée de manière à définir une base 82 destinée à être rapportée fixement et intérieurement sur le fût 45, sur une extrémité aval de ce dernier, et également de manière à définir la portée structurale de joint 60, en saillie axialement vers l'aval au-delà de la paroi aval de rainure 58.

Il est préférentiellement réalisé un tissage délié de la troisième préforme 80, de manière à définir également une base additionnelle 84 destinée à être rapportée extérieurement sur une surface aval de la partie structurale 66 définie par de la première préforme 64. La base additionnelle 84 permet non seulement de renforcer la tenue mécanique de la portée structurale de joint 80 sur la virole, mais elle renforce également la partie structurale 66 de la paroi aval de rainure 58, en courant le long de celle-ci, de préférence sur toute sa longueur radiale ou sur sensiblement toute cette longueur.

La troisième préforme 80 est ainsi préférentiellement annulaire, centrée sur l'axe 2, et de demi-section en forme générale de Y ouvert axialement vers l'amont et radialement vers l'extérieur.

Pour diminuer les frottements avec le joint, un autre revêtement antifriction 86 peut épouser la surface extérieure aval de la base additionnelle 84, et/ou de la portée structurale 60.

Le revêtement antifriction 86 peut ici aussi être un tissu destiné à être imprégné et cuit en même temps que les première, seconde et troisième préformes fibreuses 64, 68, 80. Alternativement, il peut s'agir d'un clinquant rapporté ultérieurement par collage, après consolidation du reste de la virole.

Lors de la mise en position de la troisième préforme 80, un creux peut se former entre les éléments suivants :
- la base 82 définie par la troisième préforme 80 ;
- la base additionnelle 84 définie par la troisième préforme 80 ;
- le rayon de raccordement entre le fût 45 et la partie structurale 66 définis par la première préforme 64.

Ce creux peut également être comblé à l'aide d'un matériau de remplissage 88, de préférence polymérisable.

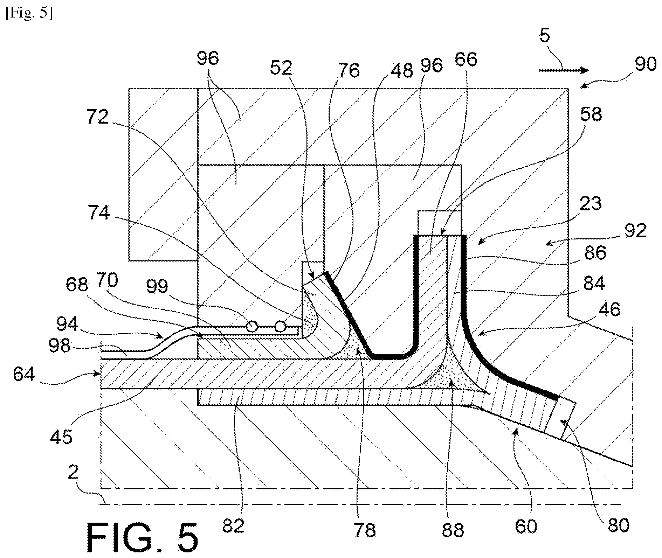

En référence à présent à la figure 5, il est montré une étape d'injection de résine à l'aide d'un outillage hybride, cette injection de résine étant destinée à l'imprégnation des préformes fibreuses 64, 68, 80 décrites en référence à la figure 4, ainsi qu'à l'imprégnation des tissus formant les revêtements antifriction 76, 86.

L'outillage hybride 90 permet non seulement la co-injection de résine pour l'imprégnation de tous les éléments 64, 68, 80, 76, 86, mais il permet également leur co-cuisson conduisant à la polymérisation de la résine qui les imprègne, ainsi qu'à la co-cuisson des matériaux de remplissage 74, 78, 88.

Pour ce faire, l'outillage hybride 90 utilisé est par exemple une combinaison entre un outillage 92 de transfert de résine en moule rigide (type RTM), et un outillage 94 à injection flexible.

Plus précisément, les portions de moule rigides 96 sont agencés de part et d'autre des parois amont et aval de rainure 52, 58, ainsi qu'à l'intérieur de la rainure 48. L'outillage rigide 92 se trouve ainsi positionné pour coopérer avec l'extrémité aval annulaire de liaison de la virole extérieure 23.

Par ailleurs, l'outillage 94 à injection flexible comporte une membrane souple et imperméable 98, recouvrant la surface extérieure du fût 45 définie par la première préforme 64, jusqu'à s'étendre sur la surface extérieure de la base 70 définie par la seconde préforme 68. Un ou plusieurs joints d'étanchéité 99 sont interposés et mis en compression entre l'extrémité de la membrane 98 reposant sur la base 70, et l'une des portions de moule rigides 96 de l'outillage 92 du type RTM. La membrane 98 permet d'apporter une pression sur la pièce à consolider lors de l'injection de résine, soit en effectuant le vide dans la chambre d'imprégnation qu'elle définit, soit par le biais d'une chambre de compaction située du côté opposé de cette membrane 98.

A l'aide de cet outillage hybride 90, la résine est co-injectée pour imprégner, lors d'une même phase, tous les éléments fibreux 64, 68, 80, 76, 86. Le chauffage procuré par cet outillage permet également la co-cuisson de ces éléments, ainsi que la co-cuisson des matériaux de remplissage 74, 78, 88. La résine associée à tous les éléments 64, 68, 80, 76, 86, 74, 78, 88 peuvent ainsi co-polymériser au cours d'une même phase de chauffage. Après cette phase de co-cuisson, il en découle une pièce unitaire « tout composite », avec l'ensemble des éléments consolidés / densifiés adhérant fixement les uns aux autres.

De nombreuses alternatives sont envisageables, notamment en raison du caractère facultatif de nombreuses parties de la virole exposée ci-dessus, comme les revêtements antifriction 76, 86, la portée de joint 60, ou encore la base additionnelle 84 lorsqu'une telle portée de joint est prévue. D'autres alternatives découlent également du fait que la cuisson n'est pas nécessairement réalisée en même temps pour tous les éléments de la virole, un phasage pouvant effectivement être mis en œuvre pour réaliser des cuissons successives, au lieu d'une seule et unique co-cuisson telle que celle décrite ci-dessus.

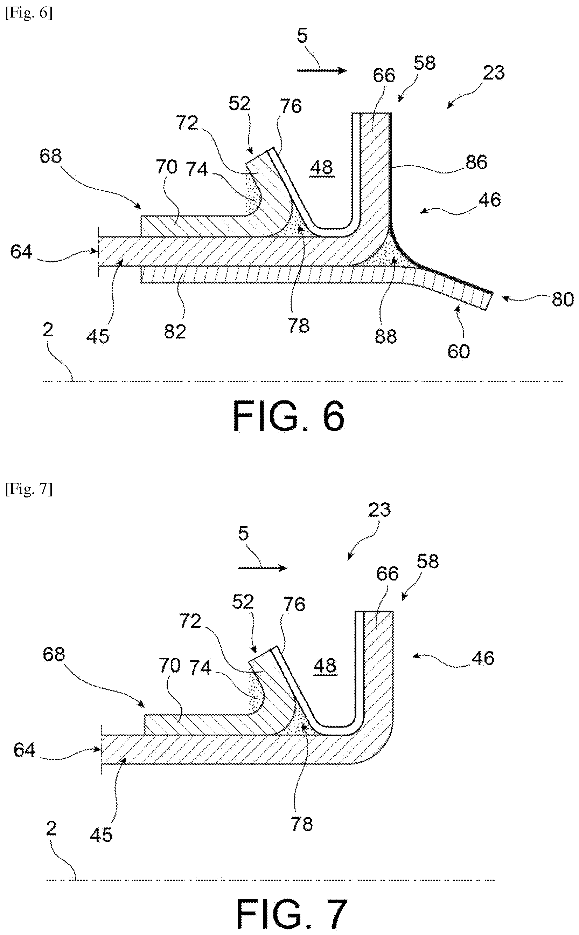

Ainsi, un autre mode de réalisation préféré est montré sur la figure 6, sur laquelle la troisième préforme 80 ne comporte que la base 82, et non la base additionnelle. Pour ce mode de réalisation, la co-cuisson des trois préformes 64, 68, 80 reste toujours envisageable, mais une cuisson ultérieure de la troisième préforme 80 pourrait être réalisée, après consolidation des première et seconde préformes 64, 68.

Encore un autre mode de réalisation préféré est montré sur la figure 7, sur laquelle la troisième préforme 80 n'est plus prévue, du fait de la non-nécessité de la portée de joint 60. Pour ce mode de réalisation, la co-cuisson des deux préformes 64, 68 reste toujours envisageable, mais une cuisson ultérieure de la seconde préforme 68 pourrait être réalisée, après consolidation de la première préforme fibreuse 68, servant alors de support sur lequel la seconde préforme 68 serait consolidée / densifiée.

Bien entendu, diverses modifications peuvent être apportées par l'homme du métier à l'invention qui vient d'être décrite, uniquement à titre d'exemples non limitatifs et dont la portée est définie par les revendications annexées.

## Revendications

1. Virole extérieure (23) de carter intermédiaire (21) pour turbomachine d'aéronef, la virole en matériau composite comprenant une extrémité aval annulaire de liaison (46) formant une rainure périphérique (48) ouverte radialement vers l'extérieur, ladite rainure (48) étant destinée à recevoir un organe de liaison complémentaire (50) prévu sur un ou plusieurs capots de nacelle (38), et cette rainure étant délimitée axialement par une paroi amont de rainure (52), ainsi que par une paroi aval de rainure (58), la virole étant réalisée à partir :
- d'une première préforme fibreuse (64) obtenue par tissage tridimensionnel de fils et densifiée par une matrice, la première préforme (64) définissant un fût (45) de la virole ainsi qu'une partie structurale (66) de la paroi aval de rainure (58), en saillie radialement vers l'extérieur par rapport au fût ; et **caractérisée en ce que** la virole est aussi réalisée à partir
- d'une seconde préforme fibreuse (68) ou d'un groupe de secondes préformes fibreuses, chaque seconde préforme fibreuse (68) étant obtenue par tissage tridimensionnel de fils et densifiée par une matrice, la seconde préforme (68) ou le groupe de secondes préformes définissant une base (70) rapportée extérieurement sur le fût (45) défini par la première préforme (64), ainsi qu'une partie structurale (72) de la paroi amont de rainure (52), en saillie radialement vers l'extérieur par rapport au fût.

2. Virole selon la revendication 1, **caractérisée en ce que** dans le cas d'une seconde préforme fibreuse (68), celle-ci présente une forme annulaire ou sensiblement annulaire centrée sur un axe central longitudinal (2) de la virole, et **en ce que** dans l'autre cas d'un groupe de secondes préformes fibreuses (68), chacune d'elles se présente sous la forme d'un secteur angulaire pour former ensemble une structure annulaire ou sensiblement annulaire centrée sur l'axe central longitudinal (2) de la virole.

3. Virole selon la revendication 1 ou la revendication 2, **caractérisée en ce qu'**elle comprend un revêtement antifriction (76) recouvrant les parois amont et aval de rainure (52, 58), à l'intérieur de la rainure (48), le revêtement antifriction (76) étant préférentiellement un tissu ou un clinquant.

4. Virole selon l'une quelconque des revendications précédentes, **caractérisée en ce qu'**elle comprend également une troisième préforme fibreuse (80) ou un groupe de troisièmes préformes fibreuses (80), chaque troisième préforme fibreuse étant obtenue par tissage tridimensionnel de fils et densifiée par une matrice, la troisième préforme (80) ou le groupe de troisièmes préformes définissant une base (82) rapportée intérieurement sur le fût (45) défini par la première préforme (64), ainsi qu'une portée structurale (60) de joint d'étanchéité faisant saillie axialement vers l'aval au-delà de la paroi aval de rainure (58).

5. Virole la revendication 4, **caractérisée en ce que** la troisième préforme (80) ou chaque préforme du groupe de troisièmes préformes est déliée au tissage de manière à définir également une base additionnelle (84) rapportée extérieurement sur la paroi aval de rainure (58).

6. Turbomachine (1) d'aéronef comprenant une virole extérieure de carter intermédiaire (23) selon l'une quelconque des revendications précédentes.

7. Procédé de fabrication d'une virole extérieure (23) de carter intermédiaire (21) pour turbomachine d'aéronef, la virole en matériau composite comprenant une extrémité aval annulaire de liaison (46) formant une rainure périphérique (48) ouverte radialement vers l'extérieur, ladite rainure étant destinée à recevoir un organe de liaison complémentaire (50) prévu sur un ou plusieurs capots de nacelle (38), et cette rainure (48) étant délimitée axialement par une paroi amont de rainure (52), ainsi que par une paroi aval de rainure (58), le procédé comportant les étapes suivantes :
- réalisation d'une première préforme fibreuse (64) par tissage tridimensionnel de fils, la première préforme étant destinée à définir un fût (45) de la virole ainsi qu'une partie structurale (66) de la paroi aval de rainure (58), en saillie radialement vers l'extérieur par rapport au fût ;
- réalisation d'une seconde préforme fibreuse (68) ou d'un groupe de secondes préformes fibreuses, chaque seconde préforme (68) étant réalisée par tissage tridimensionnel de fils, la seconde préforme ou le groupe de secondes préformes étant destiné à définir une base (70) ainsi qu'une partie structurale (72) de la paroi amont de rainure (52), en saillie radialement vers l'extérieur par rapport au fût ;
- injection et polymérisation d'une matrice de densification de la première préforme (64) ; et
- injection et polymérisation d'une matrice de densification de la seconde préforme (68) ou du groupe de secondes préformes, de manière à ce que la base (70) soit rapportée fixement et extérieurement sur le fût (45) de la virole.

8. Procédé selon la revendication 7, **caractérisé en ce que** l'injection d'une matrice de densification de la première préforme (64) s'effectue en même temps que l'injection d'une matrice de densification de la seconde préforme (68) ou du groupe de secondes préformes, par co-injection de matrice de préférence dans un outillage à injection flexible, dans un outillage de transfert de matrice en moule rigide, ou dans un outillage hybride (90) à injection flexible et de transfert de matrice en moule rigide.

9. Procédé selon la revendication 7, **caractérisé en ce qu'**il est d'abord procédé à l'injection et à la polymérisation d'une matrice de densification de la première préforme (64), de préférence dans un outillage de transfert de matrice en moule rigide, puis ensuite, lors d'une étape ultérieure de cuisson, à l'injection et à la polymérisation d'une matrice de densification de la seconde préforme (68) ou du groupe de secondes préformes, de préférence dans un outillage de transfert de matrice en moule rigide.

10. Procédé selon l'une quelconque des revendications 7 à 9, **caractérisé en ce qu'**il comprend la réalisation d'un revêtement antifriction (76) recouvrant les parois amont et aval de rainure (52, 58), à l'intérieur de la rainure (48), le revêtement antifriction (76) étant de préférence réalisé par co-cuisson lors de la cuisson de la première préforme (64) et de la seconde préforme (68) ou du groupe de secondes préformes, ou collé sur les parois amont et aval de rainure (52, 58) après ladite cuisson.

11. Procédé selon l'une quelconque des revendications 7 à 10, **caractérisé en ce qu'**il comprend également :
- la réalisation d'une troisième préforme fibreuse (80) ou d'un groupe de troisièmes préformes fibreuses, chaque troisième préforme (80) étant réalisée par tissage tridimensionnel de fils, la troisième préforme ou le groupe de troisièmes préformes étant destiné à définir une base (82) ainsi qu'une portée structurale (60) de joint d'étanchéité faisant saillie axialement vers l'aval au-delà de la paroi aval de rainure ; et
- injection et polymérisation d'une matrice de densification de la troisième préforme (80) ou du groupe de troisièmes préformes, de manière à ce que la base (82) soit rapportée fixement et intérieurement sur le fût (45) de la virole.

## Patentansprüche

1. Außenhülse (23) eines Zwischengehäuses (21) für eine Flugzeugturbomaschine, wobei die Hülse aus Verbundmaterial ein ringförmiges nachgelagertes Verbindungsende (46) umfasst, das eine radial nach außen offene Umfangsnut (48) bildet, wobei die Nut (48) dazu bestimmt ist, ein zusätzliches Verbindungselement (50) auf einer oder mehreren Maschinenhaushauben (38) aufzunehmen, und diese Nut axial durch eine vorgelagerte Nutwand (52) sowie durch eine nachgelagerte Nutwand (58) begrenzt ist,
wobei Hülse aus Folgendem hergestellt ist:
- einer ersten faserigen Vorform (64), die durch dreidimensionales Garnweben erhalten und durch eine Matrize verdichtet wird, wobei die erste Vorform (64) eine Trommel (45) der Hülse sowie einen strukturellen Teil (66) der nachgelagerten Nutwand (58) definiert, der radial nach außen in Bezug auf die Trommel vorsteht; und **dadurch gekennzeichnet ist, dass** die Hülse auch hergestellt ist aus
- einer zweiten faserigen Vorform (68) oder einer Gruppe von zweiten faserigen Vorformen, wobei jede zweite faserige Vorform (68) durch dreidimensionales Garnweben erhalten und durch eine Matrize verdichtet wird, wobei die zweite Vorform (68) oder die Gruppe von zweiten Vorformen eine Basis (70) definiert, die außen auf die von der ersten Vorform (64) definierte Trommel (45) aufgebracht ist, sowie einen strukturellen Teil (72) der vorgelagerten Nutwand (52), der radial nach außen in Bezug auf die Trommel vorsteht.

2. Hülse nach Anspruch 1, **dadurch gekennzeichnet, dass** sie im Falle einer zweiten faserigen Vorform (68) eine ringförmige oder im Wesentlichen ringförmige Form aufweist, die auf einer Längsmittelachse (2) der Hülse zentriert ist, und dass sie im anderen Falle einer Gruppe von zweiten faserigen Vorformen (68) jeweils in Form eines Winkelsektors vorliegen, um zusammen eine ringförmige oder im Wesentlichen ringförmige Struktur zu bilden, die auf der Längsmittelachse (2) der Hülse zentriert ist.

3. Hülse nach Anspruch 1 oder Anspruch 2, **dadurch gekennzeichnet, dass** sie eine Reibungsbeschichtung (76) umfasst, die die vor- und nachgelagerten Nutwände (52, 58) innerhalb der Nut (48) bedeckt, wobei die Reibungsbeschichtung (76) vorzugsweise ein Gewebe oder eine Folie ist.

4. Hülse nach einem der vorhergehenden Ansprüche, **dadurch gekennzeichnet, dass** sie auch eine dritte faserige Vorform (80) oder eine Gruppe dritter faseriger Vorformen (80) umfasst, wobei jede dritte faserige Vorform durch dreidimensionales Garnweben erhalten und durch eine Matrize verdichtet wird, wobei die dritte Vorform (80) oder die Gruppe dritter Vorformen eine Basis (82) definiert, die innen auf die Trommel (45) aufgebracht ist, die durch die erste Vorform (64) definiert ist, sowie eine strukturelle Auflagefläche (60) einer Dichtung, die axial nach unten über die nachgelagerte Nutwand (58) hinausragt.

5. Hülse nach Anspruch 4, **dadurch gekennzeichnet, dass** die dritte Vorform (80) oder jede Vorform der Gruppe dritter Vorformen so vom Gewebe gelöst ist, um auch eine zusätzliche Basis (84) zu definieren, die außen auf die nachgelagerte Nutwand (58) aufgebracht ist.

6. Flugzeugturbomaschine (1), die eine Außenhülse (23) eines Zwischengehäuses nach einem der vorhergehenden Ansprüche umfasst.

7. Verfahren zur Herstellung einer Außenhülse (23) eines Zwischengehäuses (21) für eine Flugzeugturbomaschine, wobei die Hülse aus Verbundmaterial ein ringförmiges Verbindungsende (46) umfasst, das eine radial nach außen offene Umfangsnut (48) bildet, wobei die Nut dazu bestimmt ist, ein zusätzliches Verbindungselement (50) auf einer oder mehreren Maschinenhaushauben (38) aufzunehmen, und diese Nut (48) axial durch eine vorgelagerte Nutwand (52), sowie durch eine nachgelagerte Nutwand (58) begrenzt ist,
∘ wobei das Verfahren ferner die folgenden Schritte aufweist:
- Herstellen einer ersten faserigen Vorform (64) durch dreidimensionales Garnweben, wobei die erste Vorform dazu bestimmt ist, eine Trommel (45) der Hülse sowie einen strukturellen Teil (66) der nachgelagerten Nutwand (58) zu definieren, der radial nach außen in Bezug auf die Trommel vorsteht;
- Herstellen einer zweiten faserigen Vorform (68) oder einer Gruppe von zweiten faserigen Vorformen, wobei jede zweite Vorform (68) durch dreidimensionales Garnweben hergestellt wird, wobei die zweite Vorform oder die Gruppe von zweiten Vorformen dazu bestimmt ist, eine Basis (70) sowie einen strukturellen Teil (72) der vorgelagerten Nutwand (52) zu definieren, der radial nach außen in Bezug auf die Trommel vorsteht;
- Einspritzen und Polymerisieren einer Verdichtungsmatrix der ersten Vorform (64); und
- Einspritzen und Polymerisieren einer Verdichtungsmatrix der zweiten Vorform (68) oder der Gruppe von zweiten Vorformen, so dass die Basis (70) fest und außen auf die Trommel (45) der Hülse aufgebracht ist.

8. Verfahren nach Anspruch 7, **dadurch gekennzeichnet, dass** das Einspritzen einer Verdichtungsmatrix der ersten Vorform (64) gleichzeitig mit dem Einspritzen einer Verdichtungsmatrix der zweiten Vorform (68) oder der Gruppe von zweiten Vorformen erfolgt, vorzugsweise durch Miteinspritzen der Matrize in ein Werkzeug mit flexibler Einspritzung, in ein Werkzeug für den Transfer der Matrize in eine starre Form oder in ein Hybridwerkzeug (90) mit flexibler Einspritzung und für den Transfer der Matrize in eine starre Form.

9. Verfahren nach Anspruch 7, **dadurch gekennzeichnet, dass** zunächst eine Verdichtungsmatrix der ersten Vorform (64) vorzugsweise in einem Werkzeug für den Transfer der Matrize in eine starre Form eingespritzt und polymerisiert wird und anschließend in einem späteren Brennschritt eine Verdichtungsmatrix der zweiten Vorform (68) oder der Gruppe von zweiten Vorformen vorzugsweise in einem Werkzeug für den Transfer der Matrize in eine starre Form eingespritzt und polymerisiert wird.

10. Verfahren nach einem der Ansprüche 7 bis 9, **dadurch gekennzeichnet, dass** es das Herstellen einer Reibungsbeschichtung (76) umfasst, die die vor- und nachgelagerten Nutwände (52, 58) innerhalb der Nut (48) bedeckt, wobei die Reibungsbeschichtung (76) vorzugsweise durch Mitbrennen beim Brennen der ersten Vorform (64) und der zweiten Vorform (68) oder der Gruppe von zweiten Vorformen hergestellt wird oder nach dem Brennen auf die vor- und nachgelagerten Nutwände (52, 58) geklebt wird.

11. Verfahren nach einem der Ansprüche 7 bis 10, **dadurch gekennzeichnet, dass** es ferner umfasst:
- Herstellen einer dritten faserigen Vorform (80) oder einer Gruppe von dritten faserigen Vorformen, wobei jede dritte Vorform (80) durch dreidimensionales Garnweben hergestellt wird, wobei die dritte Vorform oder die Gruppe von dritten Vorformen dazu bestimmt ist, eine Basis (82) sowie eine strukturelle Auflagefläche (60) einer Dichtung zu definieren, die axial nach unten über die nachgelagerte Nutwand hinausragt; und
- Einspritzen und Polymerisieren einer Verdichtungsmatrix der dritten Vorform (80) oder der Gruppe dritter Vorformen, so dass die Basis (82) fest und innen auf die Trommel (45) der Hülse aufgebracht ist.

## Claims

1. Exterior ferrule (23) of an intermediate casing (21) for an aircraft turbine engine, the ferrule made from composite material comprising an annular connecting downstream end (46) forming a peripheral groove (48) radially open towards the outside, said groove (48) being intended to receive a complementary connecting member (50) provided on one or more nacelle cowls (38), and this groove being delimited by an upstream groove wall (52), as well as by a downstream groove wall (58),
the ferrule being produced from:
- a first fibrous preform (64) obtained by three-dimensional weaving of threads and densified by a matrix, the first preform (64) defining a barrel (45) of the ferrule and a structural part (66) of the downstream groove wall (58), projecting radially outwards with respect to the barrel; and **characterized in that** the ferrule is also produced from
- a second fibrous preform (68) or a group of second fibrous preforms, each second fibrous preform (68) being obtained by three-dimensional weaving of threads and densified by a matrix, the second preform (68) or the group of second preforms defining a base (70) externally attached to the barrel (45) defined by the first preform (64), as well as a structural part (72) of the upstream groove wall (52), projecting radially outwards with respect to the barrel.

2. Ferrule according to claim 1, **characterised in that**, in the case of a second fibrous preform (68), this has an annular or substantially annular shape centred on a longitudinal central axis (2) of the ferrule, and **in that**, in the other case of a group of second fibrous preforms (68), each of them is in the form of an angular sector to form together an annular or substantially annular structure centred on the longitudinal central axis (2) of the ferrule.

3. Ferrule according to claim 1 or claim 2, **characterised in that** it comprises a non-friction cladding (76) covering the upstream and downstream groove walls (52, 58), inside the groove (48), the non-friction cladding (76) preferentially being a fabric or a foil.

4. Ferrule according to any one of the preceding claims, **characterised in that** it also comprises a third fibrous preform (80) or a group of third fibrous preforms (80), each third fibrous preform being obtained by three-dimensional weaving of threads and densified by a matrix, the third preform (80) or the group of third preforms defining a base (82) internally attached to the barrel (45) defined by the first preform (64), as well as a structural gasket span (60) projecting axially downstream beyond the downstream groove wall (58).

5. Ferrule according to claim 4, **characterised in that** the third preform (80) or each preform of the group of third preforms is loosened on weaving so as also to define an additional base (84) externally attached to the downstream groove wall (58).

6. Aircraft turbine engine (1), comprising an exterior intermediate-casing ferrule (23) according to any one of the preceding claims.

7. Method for manufacturing an exterior ferrule (23) of an intermediate casing (21) for an aircraft turbine engine, the ferrule made from composite material comprising an annular connecting downstream end (46) forming a peripheral groove (48) radially open towards the outside, said groove (48) being intended to receive a complementary connecting member (50) provided on one or more nacelle cowls (38), and this groove being axially delimited by an upstream groove wall (52), as well as by a downstream groove wall (58),
the method including the following steps:
- producing a first fibrous preform (64) by three-dimensional weaving of threads, the first preform being intended to define a barrel (45) of the ferrule and a structural part (66) of the downstream groove wall (58), projecting radially outwards with respect to the barrel;
- producing a second fibrous preform (68) or a group of second fibrous preforms, each second fibrous preform (68) being obtained by three-dimensional weaving of threads, the second preform or the group of second preforms being intended to define a base (70) as well as a structural part (72) of the upstream groove wall (52), projecting radially outwards with respect to the barrel;
- injecting and polymerising a matrix for densifying the first preform (64); and
- injecting and polymerising a matrix for densifying the second preform (68) or the group of second preforms, so that the base (70) is fixedly and externally attached to the barrel (45) of the ferrule.

8. Method according to claim 7, **characterised in that** the injection of a matrix for densifying the first preform (64) takes place at the same time as the injection of a matrix for densifying the second preform (68) or group of second preforms, by matrix co-injection preferably in a flexible-injection tool, in a rigid-mould matrix transfer tool, or in a hybrid flexible-injection and rigid-mould matrix transfer tool (90).

9. Method according to claim 7, **characterised in that** first of all the injection and polymerisation of a matrix for densifying the first preform (64) is proceeded with, preferably in a rigid-mould matrix transfer tool, then next, during a subsequent curing step, the injection and polymerisation of a matrix for densifying the second preform (68) or of the group of second preforms is proceeded with, preferably in a rigid-mould matrix transfer tool.

10. Method according to any one of claims 7 to 9, **characterised in that** it comprises the production of a non-friction cladding (76) covering the upstream and downstream groove walls (52, 58), inside the groove (48), the non-friction cladding (76) preferably being produced by co-curing during the curing of the first preform (64) and of the second preform (68) or of the group of second preforms, or bonded to the upstream and downstream groove walls (52, 58) after said curing.

11. Method according to any one of claims 7 to 10, **characterised in that** it also comprises:
- the production of a third fibrous preform (80) or a group of third fibrous preforms, each third preform (80) being obtained by three-dimensional weaving of threads, the third preform or the group of third preforms being intended to define a base (82) as well as a structural gasket span (60) projecting axially downstream beyond the downstream groove wall; and
- injection and polymerisation of a matrix for densifying the third preform (80) or of the group a third preforms, so that the base (82) is fixedly and internally attached to the barrel (45) of the ferrule.
